# EUROPEAN PATENT APPLICATION

(11) **EP 2 837 550 A1**
(43) Date of publication of application: **18.02.2015**
(21) Application number: 13180338.9
(22) Date of filing: 14.08.2013
(51) Int. Cl.: B62D 57/00

(54) **Carriage cart with obstacle overcoming**

(71) Applicant: ALSTOM Technology Ltd, 5400 Baden (CH)
(72) Inventor: Berlinger, Florian Conrad Joseph, 9500 Wil (CH); Clausen, Clemens Maurice, 8052 Zurich (CH); Detrekoey, Yorrick, 8008 Zurich (CH); Eichenberger, Jonas, 8057 Zurich (CH); Eppenberger, Marco Andrea, 6045 Meggen (CH); Fisler, Michael Simon, 8704 Herrliberg (CH); Mueller, Andreas, 8302 Kloten (CH); Schmid, Simon Michael, 8306 Bruettisellen (CH); Fischer, Wolfgang, 8952 Schlieren (CH)

(57) **Abstract**

The invention relates to a carriage cart (100), which comprises a chassis frame (110) with a front end (112) and a rear end (114); a pair of front wheels (130) mounted on the front end (112) of the chassis frame (110); a pair of rear wheels (130) mounted on the rear end (114) of the chassis frame (110); wherein each wheel (120,130) comprises a lifting member (140,170) pivotally mounted on a pivot (150,180) at the same side of the chassis frame (110) with the wheel (120,130), wherein when the carriage cart (100) is moving in a travel direction (10) running from the rear end (114) to the front end (112) of the chassis frame (110) on a first surface (200) by rotation of the wheel in a first rotation direction, the lifting member (140) of the front wheel (120) is projected beyond the front wheel (120) in the travel direction, and wherein as the carriage cart (100) is negotiating a second surface (300) substantially perpendicular to the first surface (200), the lifting member (140) of the front wheel (120) contacts firstly the second surface (300), by which the lifting member (140) is pivoted in a second rotation direction opposite to the first rotation direction, thereby lifting the front wheel (120) off the first surface (200). The carriage cart (100) according to example embodiments of the present invention may improve the performance of obstacle overcoming for robotic system.

## Description

### Technical Field

The present invention relates to obstacle overcoming in inspection field, in particular, to a carriage cart with obstacle overcoming for use in inspection.

### Background of the Invention

During inspection field, especially in environment not accessible by inspecting personnel, a robotic system is conventionally adopted which may carry payload such as a camera, a UT probe, a laser range scanner or other inspecting equipment. The robotic system should be provided with strong obstacle overcoming capability in order to improve the accessibility of the inspecting equipment. Generally, the robotic system comprises a carriage cart with wheels, wherein the wheels are driven by motors carried on the cart. In view of obstacle overcoming, relevant development has been proposed.

A delivery trolley that may handle steps is disclosed in DE202004005391. The delivery trolley has a chassis frame supported through a leading caster wheel and at least two rear rollers. Steering arms supported by upright beams are provided in the region of the rear rollers and a walking element such as a travelling skid is associated with the at least one caster. In its rest or starting position the walking element projects forwards beyond the caster. It is swivel mounted on the chassis frame through a rod linkage to swivel about an axis aligned across the travel direction and during straight movement parallel to the caster wheel axis. Drive motors and sensors can be used to move the trolley.

An arrangement in a wheel lifting mechanism designed to lift at least one wheel running on an underlying surface is disclosed in US7036185B2, wherein the arrangement is capable of negotiating an obstacle rising above the underlying surface. The arrangement comprises an element which is formed with a contour convexly curved towards the underlying surface and is moveably supported in relation to the axle of the wheel. The said element is designed, when the contour of the element engages with the obstacle, to bring about the said lifting of the wheel as the element is rotated about its point of engagement with the obstacle. The arrangement further comprises a chassis, to which the wheel axle is firmly connected. Between the chassis and the element there is an operative connection designed, when the element engages with the obstacle, to allow the chassis firstly to undertake lifting of the wheel from a home position of the element during a displacing movement relative thereto in the direction of movement of the wheel, and secondly to bring about a return to the home position once the wheel has been lifted to the level of the obstacle.

A device for facilitating driving a rollable walker of the type incorporating a chassis frame is disclosed in US20040135326A1, which is supported by at least one front wheel fitted to the depending frame part and a rear pair of wheels. The device incorporates a movable support attachable to the rollable walker in the area of its forward castor wheels and means adapted to move said movable support in front of said forward castor wheels when it/they are projecting backwards, at lifting of the said front castor wheels about the rear pair of wheels.

Even great development has been achieved in the field of obstacle overcoming, there still needs a compact, low cost and easy to assembly solution that would have the ability to overcome various types of the obstacles especially in dirty environment, such as pressure vessel, cargo holds of bulk carriers, ballast tank, etc., which are common application scenario for inspection by robotic system.

### Summary of the Invention

It is an object of the present invention to provide a carriage cart for using in a robotic system, which may achieve obstacle overcoming with respect to various type of obstacle in a severe environment.

This object is obtained by a carriage cart, comprises a chassis frame with a front end and a rear end; a pair of front wheels mounted on the front end of the chassis frame; a pair of rear wheels mounted on the rear end of the chassis frame; wherein each wheel comprises a lifting member pivotally mounted on a pivot at the same side of the chassis frame with the wheel, wherein when the carriage cart is moving in a travel direction running from the rear end to the front end of the chassis frame on a first surface by rotation of the wheel in a first rotation direction, the lifting member of the front wheel is projected beyond the front wheel in the travel direction, and wherein as the carriage cart is negotiating a second surface substantially perpendicular to the first surface, the lifting member of the front wheel contacts firstly the second surface, by which the lifting member is pivoted in a second rotation direction opposite to the first rotation direction, thereby lifting the front wheel off the first surface.

According to one example embodiment of the present invention, the lifting member of the front wheel is configured to be a single piece component, and comprises a first arm extending substantially in the travel direction with a first contact end and a second arm extending substantially opposite to the first arm with a second contact end, wherein the first arm is configured to extend beyond the wheel in the travel direction so as to contact the second surface by the first contact end when the carriage cart is negotiating the second surface, and the second arm is configured to extend close to the first surface, thereby press of the first surface by the second arm at the second contact end results the lifting of the front wheel as the first contact end contacts the second surface.

According to one example embodiment of the present invention, a distance between the first contact end and the first surface is greater than a distance between the pivot and the first surface.

According to one example embodiment of the present invention, a distance between the first contact end and the first surface is greater than a radius of the wheel.

According to one example embodiment of the present invention, a first idle wheel is disposed at the first contact end to contact and roll against the second surface when the carriage cart negotiates the second surface.

According to one example embodiment of the present invention, a second idle wheel is disposed at the second contact end to contact and roll against the first surface when the carriage cart is moving on the first surface.

According to one example embodiment of the present invention, the pair of the front wheel partially overlap the pair of rear wheels in the travel direction.

According to one example embodiment of the present invention, the lifting member of the front wheel is configured to be a cam contour, wherein a first protrusion is provided on the cam contour serving as the first contact end to contact firstly the second surface, and a second protrusion is provided on the cam contour serving as the second contact end to contact the first surface.

According to one example embodiment of the present invention, the lifting member of the rear wheel shares the same structure with that of the lifting member of the front wheel, and the lifting member of the rear wheel is symmetrical with the lifting member of the front wheel about a central vertical plane between the front wheel and the rear wheel.

According to one example embodiment of the present invention, the front and rear wheels are made of ferromagnetic materials, and the first and second surface are made of ferrous materials.

The carriage cart according to example embodiments of the present invention may improve the performance of obstacle overcoming for robotic system. And the carriage cart represents a low cost and easy assembly solution with high reliability for achieving obstacle overcoming in severe environment. The structure and arrangement of the carriage cart make it capable in handling various types of obstacles.

### Brief Description of the Drawings

The objects, advantages and other features of the present invention will become more apparent upon reading of the following non-restrictive description of preferred embodiments thereof, given for the purpose of exemplification only, with reference to the accompany drawing, through which similar reference numerals may be used to refer to similar elements, and in which:
- Fig. 1: shows a schematic side view of a carriage cart according to one example embodiment of the present invention;
- Fig. 2: shows a schematic plan view of the carriage cart as shown in Fig.1;
- Fig. 3: shows a side view of a carriage cart with a lifting member according to one example embodiment of the present invention;
- Fig.4: shows a partially cut-off schematic side view of another carriage cart with a lifting member according to one example embodiment of the present invention;
- Fig.5: shows a partially cut-off schematic side view of another carriage cart with a lifting member according to one example embodiment of the present invention;
- Fig.6: shows a schematic side view of the carriage cart with the lifting member as shown in Fig. 5;
- Fig.7: shows a schematic plan view of the carriage cart with the lifting member as shown in Fig. 5;
- Fig.8: shows a schematic side view of a carriage cart according to one example embodiment of the present invention; and
- Fig. 9: shows a schematic plan view of the carriage cart as shown in Fig.8.

### Detailed Description of Different Embodiments of the Invention

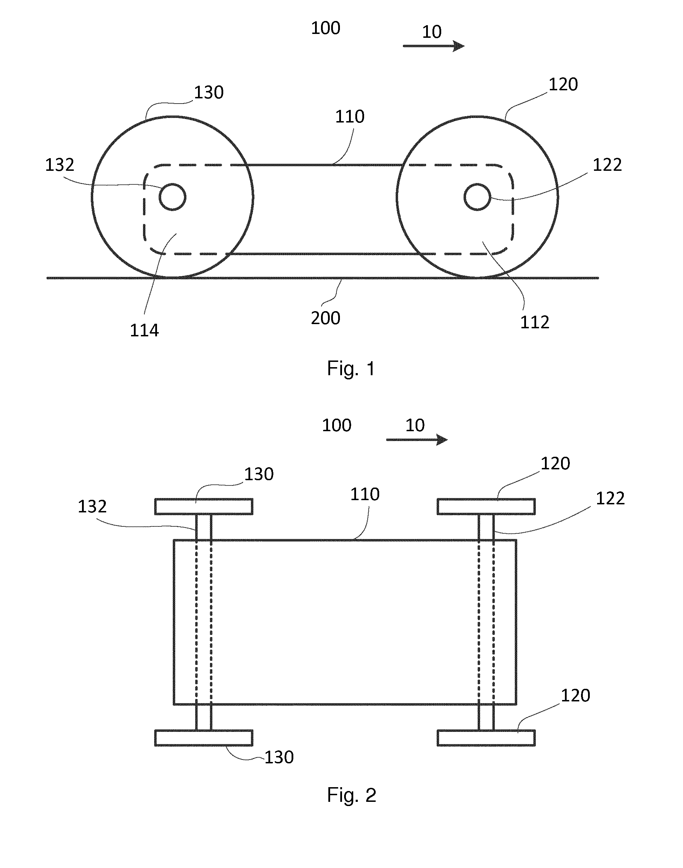

Fig. 1 shows a schematic diagram of a carriage cart 100 according to one example embodiment of the present invention. Carriage cart 100 comprises a chassis frame 110 with a front end 112 and a rear end 114, a pair of front wheels 120 mounted on an axis 122 on the front end 112 and a pair of rear wheels 130 mounted on an axis 132 on the rear end 114. As shown in Fig.1, the carriage cart 100 may move along a travel direction running from the rear end 114 to the front end 112 as shown by arrow 10. Fig. 2 shows a schematic plan view of the carriage cart 100. In one example embodiment of the present invention, the carriage cart 100 comprises motors, not shown, for respective wheels 120, 130 to drive them move on a first surface 200.

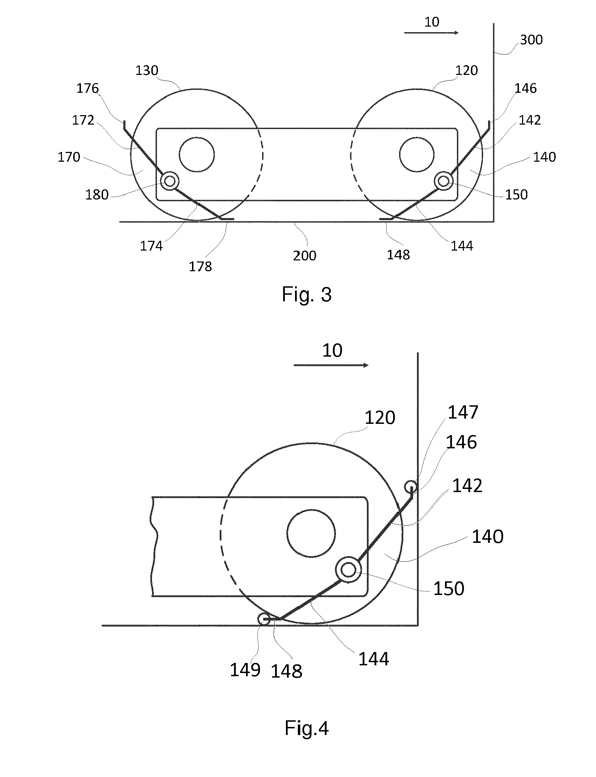

According to one example embodiment, as shown in Fig.3, the carriage cart 100 comprises a lifting member 140 for each wheels 120, 130. For purpose of simplicity and clarity of description, Fig. 3 shows only a part of the carriage cart 100 with only one front wheel 120 on the left side when viewed in the travel direction 10, while the front wheel 120 on the right side is omitted for clearly showing the lifting member 140 on the right side for the front wheel 120 on the right side. As example embodiments of the present invention, the lifting member 140 for particular wheel 120,130 is mounted closer to the chassis frame 110 than the particular wheel 120, 130. In other words, the lifting member 140 is mounted inwardly to the chassis frame 110 from the particular wheel 120, 130.

As shown in Fig.3, the lifting member 140 is pivotably mounted on a pivot 150 at the same side of the chassis frame 110 with the front wheel 120, as an illustrative example. In other words, the lifting member 140 for the front wheel 120 on the right side is mounted on the right side of the chassis frame 110, with the pivot 150 parallel to the axis 122 of the front wheel 120. Even not shown in the drawings, it should be understood that other lifting members share similar arrangement with their respective wheels. With reference to Fig. 3, the lifting member 140 projects beyond the front wheel 120 substantially in the travel direction 10. Thus, when the carriage cart 100 is negotiating a second surface 300 that is substantially perpendicular to the first surface 200, the lifting member 140 will contact firstly the second surface 300 than the front wheel 120. In other words, the lifting member 140 contacts the second surface 300 earlier than the front wheel 120. As shown in Fig.3, the lifting member 170 for the rear wheel 130 shares the same structure with that of the lifter member 140 for the front wheel 120. However, the lifting member 170 for the rear wheel 130 is symmetrical with the lifting member 140 for the front wheel 120 about a central vertical plane between the front wheels 120 and the rear wheels 130. As shown in Fig. 3, the lifting member 170 is pivotably mounted on a pivot 180 at the same side of the chassis frame 110 with the rear wheel 130.

As one example embodiment of the present invention, as shown in Fig. 3, the lifting member 140 is configured to be a single piece component, and comprises a first arm 142 extending substantially in the travel direction 10, with a first contact end 146, and a second arm 144 extending substantially opposite to the first arm 142, with a second contact end 148. It is seen from Fig.3, the first contact end 146 of the first arm 142 extends beyond the front wheel 120 in the travel direction 10 so as to contact the second surface 300 by the first contact end 146 when the carriage cart 100 is negotiating the second surface 300. Furthermore, the second arm 144 is configured to extend close to the first surface 200 when the carriage cart 100 is moving on the first surface 200. For example, when the carriage cart 100 moving on the first surface 200 by the rotation of the wheels 120, 130 in clockwise direction is negotiating the second surface 300, the first contact end 146 of first arm 142 of the lifting member 140 will impact the second surface 300 with the drive of the not shown motors applied to the wheels 120, 130, by which the lifting member 140 will pivot about the pivot 150 in counterclockwise direction, thereby the second contact end 148 of the second arm 144 of the lifting member 140 will be pressed against the first surface 200, resulting lifting of the front wheel 120, i.e. the chassis frame 110 along with the front wheel 120 will pivot about the contact point of the rear wheel 130 with the first surface 200 in a counterclockwise direction. The operation of the lifting member 140 will prevent stuck of the front wheel 120 against the second surface 300 when the carriage cart 100 is negotiating the second surface 300. Then, the front wheel 120 will move with the drive of the not shown motors and contact the second surface 300, by which the movement of the carriage cart will continue on the second surface 300. As shown in Fig. 3, the lifting member 170 is also configured to be a single piece component, and comprises a first arm 172 extending substantially in a direction opposite the travel direction 10, with a first contact end 176, and a second arm 174 extending substantially opposite to the first arm 172, with a second contact end 178.

It should be noted that, since the lifting member 170 shares the same structure with that of the lifting member 140, the structural features as detailed hereafter equally apply to the lifting member 170. For purpose of simplicity and clarity, the below description takes only the lifting member 140 as an example.

As one example embodiment of the present invention, the wheels 120, 130 of the carriage cart 100 are made of ferromagnetic materials, and the first and second surfaces 200, 300 are made of ferrous materials. The magnetic bond of the carriage cart 100 by the wheels 120, 130 to the second surface 300 will prevent drop of the carriage cart 100 when it is moving on the second surface 300. At the same time, the magnetic bond of the wheels 120,130 to the first surface 200 contributes to the stuck of the carriage cart 100 when it is negotiating the second surface 300. With the operation of the lifting member 140, lifting of the front wheel 120 will facilitate release of the carriage cart 100 from the first surface 200 hence reduction of the magnetic bond therebetween and prevent stuck of the carriage cart 100 against the second surface 300. While the front wheel 120 will contact and adhere to the second surface 300 after lifting of the front wheel 120, thereby facilitating transition of the movement of the carriage cart 100 from the first surface 200 to the second surface 300, improving its obstacle overcoming capability. According to one example embodiment, the lifting member 140 may be combined with two rollers or bearings which are in contact with the surface, allowing for a smooth transition from one surface to the next of the carriage cart 100.

As one example embodiment of the present invention, the distance of the first contact end 146 and the first surface 200 is greater than a distance between the pivot 150 and the first surface 200. This will facilitate pivot of the lifting member 140 in the opposite direction to the rotation of the front wheel 120. As alternative embodiment, the distance between the first contact end 146 and the first surface 200 is greater than a radius of the wheel. This will further facilitate the pivot of the lifting member 140 in the opposite direction to the rotation of the front wheel 120.

As alternative embodiment of the present invention shown in Fig. 4, the first contact end 146 of the first arm 142 of the lifting member 140 may be provided with an idle wheel 147, which will contact and roll on the second surface 300 when the carriage cart 100 is negotiating the second surface 300, thereby reducing friction and facilitating pivot of the lifting member 140 hence facilitating lifting of the front wheel 120. In addition, the second contact end 148 of the second arm 144 of the lifting member 140 may also be provided with an idle wheel 149, which may roll on the first surface as the carriage cart 100 is moving on the first surface 200. Furthermore, when the carriage cart 100 is negotiating the second surface 300 and the first arm 142 of the lifting member 140 is contacting the second surface 300 by the idle wheel 147, the idle wheel 149 may press the first surface 200 so as to lifting the front wheel 120.

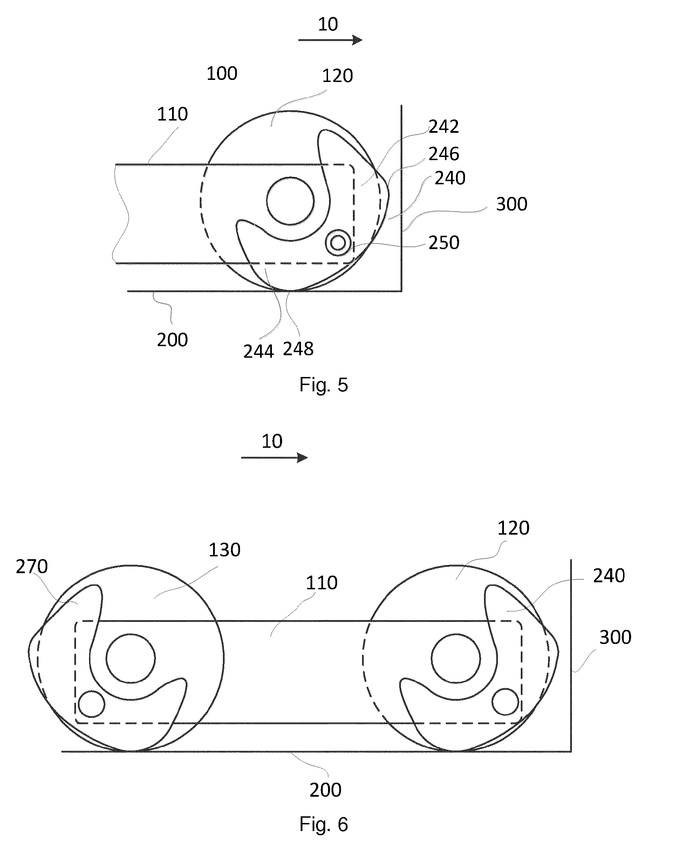

As another example embodiment shown in Fig. 5, the lifting member 140 may be configured to be a cam contour 240. With reference to Fig.5, cam contour 240 may consists of a first portion 242 with a protrusion 246 beyond the front wheel 120 in the travel direction 10, and a second portion 244 with a protrusion 248 extending substantially close to the first surface 200 as the carriage cart 100 is moving on the first surface 200. The cam contour 240 is pivotablly attached to the chassis frame 110 of the carriage cart 100 at the pivot 250. As described above, similar to the lifting member 140 described with reference to Fig. 3, when the carriage cart 100 is negotiating the second surface 300 as moving on the first surface 200, the cam contour 240 may contact the second surface 300 firstly by means of the protrusion 246, by which the cam contour 240 will pivot around pivot 250 in counterclockwise direction that is opposite to the rotation direction of the front wheel 120, thereby the protrusion 248 of the cam contour 240 will press the first surface 200 and lifting the front wheel 120. As stated above, the lifting member 170 may be also configured to be another cam contour 270 (shown in Fig.6) that shares the same structure with that of the cam contour 240. However, the cam contour 270 is symmetrical with the cam contour 240 about the central vertical plane between the front wheel 120 and the rear wheel 130.

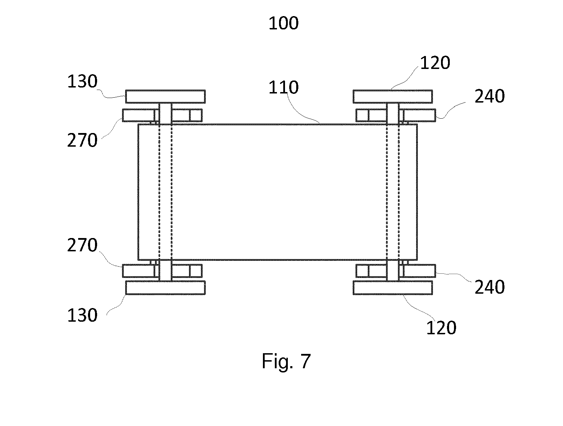

Fig.6 shows a side view of the carriage cart 100 with the cam contours 240 for each front wheels 120, and cam contour 270 for each rear wheels 130. As shown in Fig. 6, the cam contour 240 for front wheels 120 and the cam contour 270 for rear wheels 130 on the right side as viewed in the travel direction 10 is shown, with the front wheels 120 and rear wheels 130 on the right side omitted for clarity. Fig. 7 shows the plan view of the carriage cart 100, wherein all cam contours 240, 270 are presented for easy understanding their positions relating to the front and rear wheels 120, 130 and the chassis frame 110.

As another alternative embodiment not shown in the drawings, an idle wheel may be provided also to the protrusion 246, 248 in order to facilitate operation of the cam contour. The structure and arrangement of the idle wheel may be similar to that as described above with reference to Fig. 4, from which those skilled in the art will appreciate.

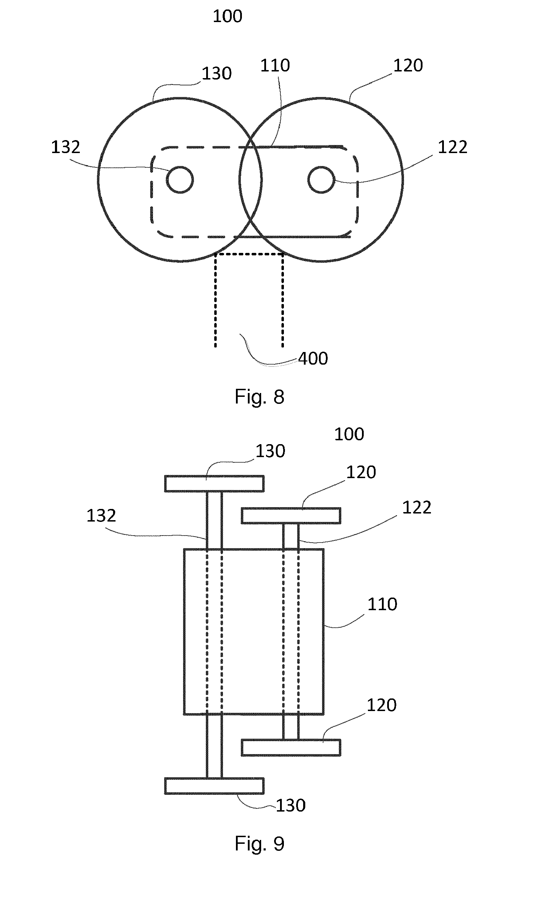

In another aspect of the present invention, one example embodiment is shown in Fig. 8, where the carriage cart 100 comprises a pair of front wheels 120 and a pair of rear wheels 130. As shown in Fig. 8, the pair of the front wheels 120 partially overlaps the pair of the rear wheels 130 in the travel direction 10. As such, the carriage cart 100 is capable overcome an "I" shape obstacle 400 as shown by phantom line in Fig. 8. In this case, the rear wheels 130 may be provided with a larger distance in the axis 132 than that of the front wheels 120 in the axis 122 in order to avoid interference, as shown in Fig. 9.

As another example embodiment that is not shown in the drawings, the carriage cart 100 as shown in Fig.8 may also comprises the lifting member 140, 170 or cam contour 240, 270 as shown in Fig.3 or Fig. 5 in order to achieve the technical effect when negotiate the second surface.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

### List of Reference Numerals

- 10: travel direction
- 100: carriage cart
- 110: chassis frame
- 112: front end
- 114: rear end
- 120: front wheel
- 122: front axis
- 130: rear wheel
- 132: rear axis
- 140: lifting member
- 142: fi rst arm
- 144: second arm
- 146: first contact end
- 147: idle wheel
- 148: second contact end
- 149: idle wheel
- 150: pivot
- 170: lifting member
- 172: first arm
- 174: second arm
- 176: first contact end
- 178: second contact end
- 180: pivot
- 200: first surface
- 240: cam contour
- 242: first portion
- 244: second portion
- 246: protrusion
- 248: protrusion
- 250: pivot
- 270: cam contour
- 300: second surface
- 400: "I" type obstacle

## Claims

1. A carriage cart, comprises
a chassis frame with a front end and a rear end;
a pair of front wheels mounted on the front end of the chassis frame;
a pair of rear wheels mounted on the rear end of the chassis frame;
wherein each wheel comprises a lifting member pivotally mounted on a pivot at the same side of the chassis frame with the wheel,
wherein when the carriage cart is moving in a travel direction running from the rear end to the front end of the chassis frame on a first surface by rotation of the wheel in a first rotation direction, the lifting member of the front wheel is projected beyond the front wheel in the travel direction, and wherein as the carriage cart is negotiating a second surface substantially perpendicular to the first surface, the lifting member of the front wheel contacts firstly the second surface, by which the lifting member is pivoted in a second rotation direction opposite to the first rotation direction, thereby lifting the front wheel off the first surface.

2. The carriage cart according to claim 1, **characterized in that**, the lifting member of the front wheel is configured to be a single piece component, and comprises a first arm extending substantially in the travel direction with a first contact end and a second arm extending substantially opposite to the first arm with a second contact end, wherein the first arm is configured to extend beyond the wheel in the travel direction so as to contact the second surface by the first contact end when the carriage cart is negotiating the second surface, and the second arm is configured to extend close to the first surface, thereby press of the first surface by the second arm at the second contact end results the lifting of the front wheel as the first contact end contacts the second surface.

3. The carriage cart according to claim 1 or 2, **characterized in that** a distance between the first contact end and the first surface is greater than a distance between the pivot and the first surface.

4. The carriage cart according to any of claims 1 to 3, **characterized in that** a distance between the first contact end and the first surface is greater than a radius of the wheel.

5. The carriage cart according to any of claims 1 to 4, **characterized in that** a first idle wheel is disposed at the first contact end to contact and roll against the second surface when the carriage cart negotiates the second surface.

6. The carriage cart according to any of claims 1 to 5, **characterized in that** a second idle wheel is disposed at the second contact end to contact and roll against the first surface when the carriage cart is moving on the first surface.

7. The carriage cart according to any of claims 1 to 6, **characterized in that** the pair of the front wheel partially overlap the pair of rear wheels in the travel direction.

8. The carriage cart according to any of claims 1 to 7, **characterized in that** the lifting member of the front wheel is configured to be a cam contour, wherein a first protrusion is provided on the cam contour serving as the first contact end to contact firstly the second surface, and a second protrusion is provided on the cam contour serving as the second contact end to contact the first surface.

9. The carriage cart according to claim 1 to 8, **characterized in that**, the lifting member of the rear wheel shares the same structure with that of the lifting member of the front wheel, and the lifting member of the rear wheel is symmetrical with the lifting member of the front wheel about a central vertical plane between the front wheel and the rear wheel.

10. The carriage cart according to any of claims 1 to 9, **characterized in that** the front and rear wheels are made of ferromagnetic materials, and the first and second surface are made of ferrous materials.
